Europäisches Patentamt

European Patent Office

Office européen des brevets

(11) Publication number: **0 309 104 B1**

(12) **EUROPEAN PATENT SPECIFICATION**

(45) Date of publication of patent specification: **22.07.92**    (51) Int. Cl.5: **G01N 27/416**

(21) Application number: **88308051.7**

(22) Date of filing: **31.08.88**

(54) **Analysing the oxygen content of gases in industrial processes.**

(30) Priority: **03.09.87 US 92868**

(43) Date of publication of application:
**29.03.89 Bulletin 89/13**

(45) Publication of the grant of the patent:
**22.07.92 Bulletin 92/30**

(84) Designated Contracting States:
**DE FR GB IT NL**

(56) References cited:
**US-A- 3 720 594**
**US-A- 4 005 001**
**US-A- 4 663 017**

(73) Proprietor: **INTERNATIONAL CONTROL AUTO-
MATION FINANCE S.A.**
**16 Rue des Bains**
**Ville de Luxembourg(LU)**

(72) Inventor: **Barnett, Daniel C.**
**10100 Chipmunk Ridge**
**Concord Township Ohio 44077(US)**
Inventor: **Fry, John James**
**1742 Empire Road**
**Wickliffe Ohio 44092(US)**
Inventor: **Smith, Robert A.**
**8252 Findley Drive**
**Mentor Ohio 44060(US)**
Inventor: **Hall, George Robert, II.**
**1917 Robindale Street**
**Wickliffe Ohio 44092(US)**
Inventor: **Ross, David F.**
**185 East 280th Street**
**Euclid Ohio 44132(US)**
Inventor: **Woolbert, Gordon Davies**
**6858 Burgundy Avenue N.W.**
**North Canton Ohio 44132(US)**

(74) Representative: **Pilch, Adam John Michael et
al**
**D. YOUNG & CO. 10 Staple Inn**
**London WC1V 7RD(GB)**

## Description

This invention relates to apparatus for and methods of analysing the oxygen content of gases in industrial processes.

Oxygen analysers are used extensively in industrial process control. When used in such control applications, these analysers typically incorporate three major components: a zirconium dioxide sensor which produces a voltage output signal representative of oxygen concentration within the gas sample being analysed; a heater to elevate the temperature of the sensor to a required operating temperature; and a heater control circuit to maintain the sensor temperature independent of the environment. US Patent No. US-A-4 005 001 discloses an analyser of this type.

It has been found that the use of a typical zirconium dioxide sensor for industrial process control has a number of inherent disadvantages. For example, the use of such a sensor typically requires the utilisation of many associated parts, clamps, seals and fasteners making assembly and/or replacement a difficult task. In addition, it has been found that tight gas seals are difficult to maintain. Also, alignment of the components comprising the assembly is difficult to achieve and maintain. The zirconium dioxide sensor must be located in the gas stream and the heater and thermocouple must be aligned with the sensing tip. It has been further found that exposure of the heater element to corrosive gas streams reduces heater life. Lastly, complex heater control circuitry is required because of the low mass of the heater. Temperature control is critical to prevent deviations of the sensor output.

It has therefore become desirable to develop a simplified system for analysing the oxygen content of a gas utilised in an industrial process. Such a simplified system should minimise the critical nature of controlling the heater temperature within the sensor.

According to one aspect of the invention there is provided apparatus for analysing the oxygen content of a gas in an industrial process, the apparatus comprising:

an analyser manifold having an oxygen sensor operatively associated therewith;

means for directing a gas sample from the industrial process to the analyser manifold and across a sensor element of the oxygen sensor;

electric heating means for maintaining the sensor element within a desired operating temperature range; and

a power supply connected to the electric heating means;

characterised in that:

the oxygen sensor is an automotive type oxygen sensor such as an exhaust gas λ-sensor;

the electric heating means is integral within the automotive type oxygen sensor and has a nominal voltage rating of 12 to 14V; and

the power supply is operable to regulate the output voltage thereof applied to the integral electric heating means at a level higher than the nominal voltage rating, and to limit the current applied to the integral electric heating means during cold start-up to reduce stress on the integral electric heating means.

According to another aspect of the invention there is provided a method of analysing the oxygen content of a gas in an industrial process, the method comprising the steps of:

situating an oxygen sensor having a sensor element in an analyser manifold;

maintaining the sensor element within a desired operating temperature range by applying a voltage to a heating element; and

directing a gas sample from the industrial process through the analyser manifold to the sensor element to obtain a signal therefrom indicative of the oxygen content of the gas sample;

characterised in that:

the oxygen sensor is an automotive type oxygen sensor such as an exhaust gas λ-sensor;

the electric heating element is integral within the automotive type oxygen sensor and has a nominal voltage rating of 12 to 14V; and

the voltage applied to the integral heating element is higher than the nominal voltage rating, and the current supplied thereto is limited during cold start-up to extend the life of the sensor.

A preferred embodiment of the present invention, to be described in greater detail hereinafter, solves the problems associated with the previously-proposed sensors and other problems by utilising an automotive type oxygen sensor such as an exhaust gas λ-sensor in place of the costly zirconium dioxide sensor typically used to determine the oxygen content of a gas in an industrial process. The use of such an automotive type oxygen sensor requires a higher operating temperature than that normally required for a zirconium dioxide sensor, but sensor heater temperature is not nearly as critical. Such a higher operating temperature is achieved by applying a higher supply voltage to the sensor heater than is typically used, and by utilising a current limiting circuit in conjunction with the higher supply voltage. The use of a higher supply voltage does not decrease heater life since current levels are actually less than those experienced with a lower supply voltage.

The invention will now be described, by way of illustrative and non-limiting example, with reference to the accompanying drawings, in which:

Figure 1 is a schematic diagram showing the use of an automotive type oxygen sensor in conjunction with an associated power supply for analysing the oxygen content of a gas in an industrial process; and

Figure 2 is an electrical schematic circuit diagram of the power supply for an automotive type oxygen sensor such as that shown in Figure 1.

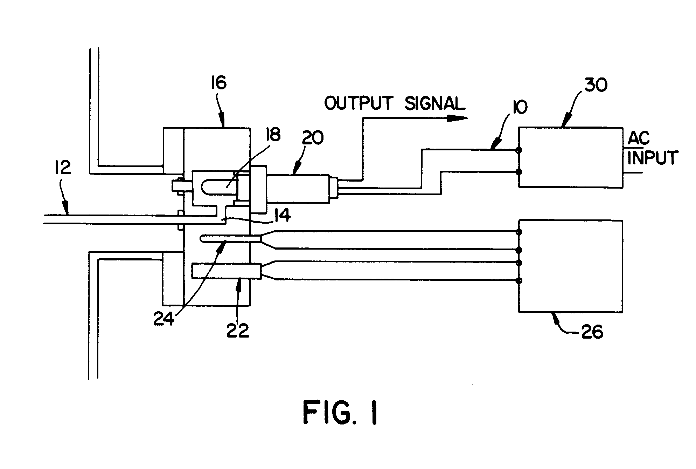

Referring now to the drawings, Figure 1 is a schematic diagram of a system 10 for analysing the oxygen content of an industrial process by using an automotive type oxygen sensor 20 including a sensor element 18.

The automotive type oxygen sensor 20 is a so-called $\lambda$-sensor, such as a Bosch (trade mark) exhaust gas $\lambda$-sensor. This type of sensor generally has a threaded section similar to that of a spark plug for easy insertion and removal. An air electrode is provided within the tube, closed on one side. A catalytically active electrode on the exhaust gas side is particularly responsible for its correct function and characteristic curve. It includes a multi-layer system containing a micro-porous, vacuum-deposited platinum layer and a highly porous ceramic layer.

In the system 10, a gas sample is drawn from the monitored industrial process through a sample probe 12. The drawing of this sample is typically accomplished through the use of an air powered aspirator (not shown) within the oxygen analyser. The gas sample is directed through a passageway 14 in an analyser manifold 16 across the sensor element 18 and is exhausted back into the gas flow of the industrial process. The analyser manifold 16 is controlled to be at a substantially constant temperature above the gas stream dew point, typically 300°F to 600°F (149°C to 316°C). The controlled manifold temperature provides a substantially constant ambient temperature for the automotive type oxygen sensor 20. The analyser manifold 16 is heated by one or more heaters 22 and controlled by a temperature sensing element 24 which is connected to a temperature control circuit 26. An integral heater (not shown) within the automotive type oxygen sensor 20 is connected to a power supply 30 which is adjusted to provide the desired operating temperature at the sensor element 18 of the automotive type oxygen sensor 20. The operating temperature of the sensor element 18 is dependent upon the process being monitored but is typically between 1300°F and 1500°F (704°C and 816°C).

When the automotive type oxygen sensor 20 is used, the temperature of the sensor element 18 is not critical since the sensor is used only as a switch at or near stoichiometric conditions (excess air factor $\lambda$ = 1). The switching occurs in the range of 200 to 500 mV output and can operate reliably anywhere above 350°C. Analysing industrial processes for percent oxygen content requires accurate measurements above the $\lambda$ = 1 control range to 100% excess air. A higher operating temperature is required to raise the mV DC output level to a usable span over this range and also to minimise the effect of interfering gases such as sulphur dioxide. This higher operating temperature is achieved by applying a higher supply voltage to the heater within the automotive type oxygen sensor 20 while limiting the current thereto. Such a higher supply voltage is provided by the power supply 30 as hereinafter described.

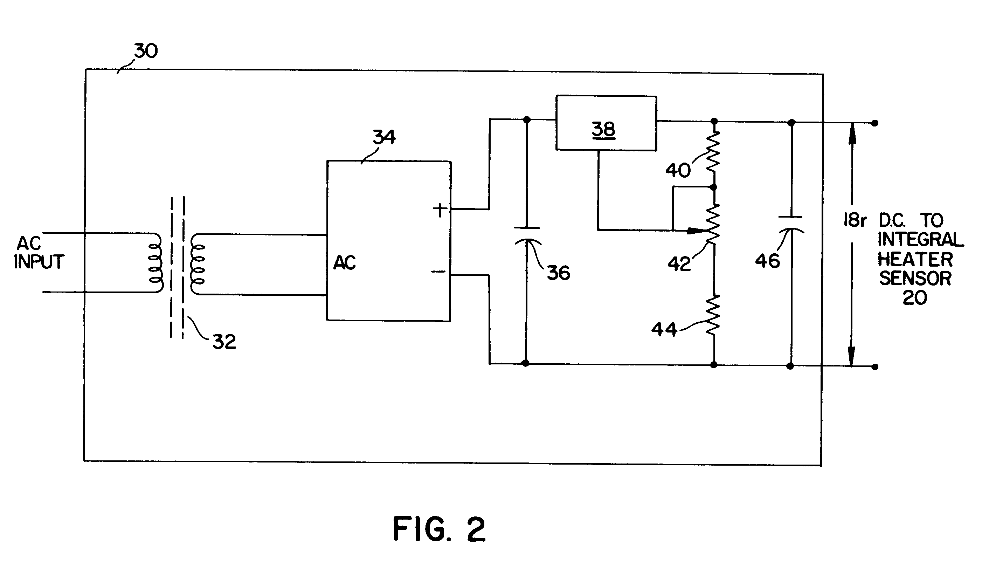

Referring now to Figure 2 which is an electrical circuit diagram of the power supply 30, this power supply typically converts 120 V AC 50/60 Hz line power to the 18 V DC 1 amp level required by the heater within the automotive type oxygen sensor 20. The power supply also limits the current supplied to the heater under cold start-up conditions. The power supply 30 includes a transformer 32 which converts the 120 V AC line input to a voltage which is somewhat greater than the voltage typically utilised by the sensor heater. A bridge rectifier 34 and a capacitor 36 convert the AC output from the transformer 32 to a DC voltage which is applied to a voltage regulator 38 which, in turn, regulates the DC voltage to a level determined by a series of resistors 40, 42 and 44. A capacitor 46 is connected across the series combination of resistors 40, 42 and 44 to provide additional filtering and stability to the circuit. The combination of resistors 40, 42 and 44 allows the output voltage of the circuit to be varied according to installation requirements.

During normal operation, the power supply 30 supplies the nominal 18 V DC and 1 amp power required by the sensor heater. During cold start-up conditions, a current limiting mechanism, which is an integral part of the voltage regulator 38, varies the output voltage of the power supply 30 so that the maximum current through the sensor heater does not exceed approximately 2.2 amps.

Controlling the sensor heater voltage through the output voltage of the power supply 30 provides several distinct advantages. First, the heater voltage is controlled much more closely than in typical automotive applications thus making the oxygen concentration measurement considerably more accurate. In addition, the voltage which is applied to the heater is somewhat higher than the nominal 12 to 14 volts typically used in an automotive application allowing the heater to reach a higher operating temperature thereby permitting the automotive type oxygen sensor to be used in an industrial process control application. Lastly, the current limiting ability of the power supply reduces the stress on the sensor heater during cold start-up conditions.

The possibility of using an automotive type oxygen sensor in an industrial process control application provides several inherent advantages. For example, the oxygen sensor 20 threads directly into the analyser manifold 16 and seals with only one captive spark plug type seal. No alignment is required with respect to a separate heater, thermocouple or gas stream as is typically required with present industrial oxygen analysers. By using an automotive type oxygen sensor, the integral internal heating element is not exposed to corrosive process gases, thus extending heater life. The positive temperature coefficient of the heater element used in an automotive type oxygen sensor aids in current limiting of the heater as the operating temperature is approached. Current limiting of the heater supply circuit provides cold start-up current protection thus allowing for higher voltage operation (typically 18 V DC) than in automotive applications (typically 13.5 V DC). This, in turn, requires less ambient temperature control (typically 300°F (149°C)) for the analyser manifold to attain the required operating temperature (typically 1300°F (704°C)) for the heater. Temperature control of the higher mass, lower temperature analyser manifold, instead of the smaller sensor heater, simplifies the heater control circuitry. Lastly, the more rugged design of the automotive type oxygen sensor greatly reduces the possibility of breakage.

## Claims

1. Apparatus for analysing the oxygen content of a gas in an industrial process, the apparatus (10) comprising:

   an analyser manifold (16) having an oxygen sensor (20) operatively associated therewith;
   means (12, 14) for directing a gas sample from the industrial process to the analyser manifold (16) and across a sensor element (18) of the oxygen sensor (20);
   electric heating means for maintaining the sensor element (18) within a desired operating temperature range; and
   a power supply (30) connected to the electric heating means;
   characterised in that:
   the oxygen sensor is an automotive type oxygen sensor (20) such as an exhaust gas λ-sensor;
   the electric heating means is integral within the automotive type oxygen sensor (20) and has a nominal voltage rating of 12 to 14V; and
   the power supply (30) is operable to regulate the output voltage thereof applied to the integral electric heating means at a level higher than the nominal voltage rating, and to limit the current applied to the integral electric heating means during cold start-up to reduce stress on the integral electric heating means.

2. Apparatus according to claim 1, comprising:

   means (24) for sensing the temperature of the analyser manifold (16); and
   means (26) for controlling the temperature of the analyser manifold (16) at a substantially constant temperature above the dew point temperature of the gas sample.

3. Apparatus according to claim 2, wherein the substantially constant temperature at which the analyser manifold (16) is maintained is between about 700°C and 820°C.

4. Apparatus according to claim 1, claim 2 or claim 3, wherein the output voltage supplied by the power supply (30) to the integral heating means is 18V DC and the current level is 1 amp, during normal operation.

5. Apparatus according to any one of the preceding claims, wherein the maximum current through the integral electric heating means is limited so as not to exceed approximately 2.2 amps during cold start-up conditions.

6. A method of analysing the oxygen content of a gas in an industrial process, the method comprising the steps of:

   situating an oxygen sensor (20) having a sensor element (18) in an analyser manifold (16);
   maintaining the sensor element (18) within a desired operating temperature range by applying a voltage to a heating element; and
   directing a gas sample from the industrial process through the analyser manifold (16) to the sensor element (18) to obtain a signal therefrom indicative of the oxygen content of the gas sample;
   characterised in that:
   the oxygen sensor is an automotive type oxygen sensor (20) such as an exhaust gas λ-sensor;
   the electric heating element is integral within the automotive type oxygen sensor (20) and has a nominal voltage rating of 12 to 14V; and
   the voltage applied to the integral heating element is higher than the nominal voltage rating, and the current supplied thereto is limited during cold start-up to extend the life of the sensor (20).

7. A method according to claim 6, wherein the desired temperature range of the sensor element (18) is between about 700°C and 820°C.

8. A method according to claim 6 or claim 7, wherein the temperature of the analyser manifold (16) is maintained at a substantially constant temperature above the dew point temperature of the gas sample.

9. A method according to claim 6, claim 7 or claim 8, wherein the voltage applied to the integral heating element of the automotive type oxygen sensor (20) is 18V DC and the current level is 1 amp during normal operation.

10. A method according to any one of claims 6 to 9, wherein the maximum current through the integral heating element is limited so as not to exceed approximately 2.2 amps during cold start-up conditions.

**Revendications**

1. Appareil pour analyser la teneur en oxygène d'un gaz dans un processus industriel, l'appareil (10) comprenant :

un collecteur d'analyseur (16) comportant un capteur d'oxygène (20) associé fonctionnellement avec lui ;

un moyen (12, 14) pour diriger un échantillon de gaz venant du processus industriel vers le collecteur d'analyseur (16) et à travers un élément capteur (18) du capteur d'oxygène (20) ;

un moyen de réchauffeur électrique pour maintenir l'élément capteur (18) à l'intérieur d'une plage de température de mise en oeuvre souhaitée ; et

une alimentation en courant (30) reliée au moyen de réchauffeur électrique ;

caractérisé en ce que :

le capteur d'oxygène est un capteur d'oxygène du type pour automobile (20) comme un capteur λ de gaz d'échappement ;

le moyen de réchauffeur électrique est intégré dans le capteur d'oxygène du type pour automobile (20) et a une valeur de tension nominale de 12 à 14 V ; et

l'alimentation en courant (30) peut être mise en oeuvre pour réguler sa tension de sortie, appliquée au moyen de réchauffeur électrique intégré, à un niveau plus élevé que la valeur de tension nominale, et pour limiter le courant délivré au moyen de réchauffeur électrique intégré pendant le démarrage à froid pour réduire la contrainte sur le moyen de réchauffeur électrique intégré.

2. Appareil selon la revendication 1, comprenant :

un moyen (24) pour détecter la température du collecteur d'analyseur (16) ; et

un moyen (26) pour commander la température du collecteur d'analyseur (16) à une température sensiblement constante au-dessus de la température de point de rosée de l'échantillon de gaz.

3. Appareil selon la revendication 2, dans lequel la température sensiblement constante à laquelle le collecteur d'analyseur (16) est maintenu, est située entre environ 700° C et environ 820° C.

4. Appareil selon la revendication 1, la revendication 2 ou la revendication 3, dans lequel la tension de sortie, délivrée par l'alimentation en courant (30) au moyen de réchauffeur intégré, est de 18 V en courant continu et le niveau de courant est de 1 ampère, en fonctionnement normal.

5. Appareil selon l'une quelconque des revendications précédentes, dans lequel le courant maximal dans le moyen de réchauffeur électrique intégré est limité de manière à ce qu'il ne dépasse pas environ 2,2 ampères pendant les états de démarrage à froid.

6. Procédé d'analyse de la teneur en oxygène d'un gaz dans un processus industriel, le procédé comprenant les étapes de :

mise en place d'un capteur d'oxygène (20) comportant un élément capteur (18) dans un collecteur d'analyseur (16) ;

maintien de l'élément capteur (18) à l'intérieur d'une plage de température de mise en oeuvre par application d'une tension à un élément réchauffeur ; et

envoi d'un échantillon de gaz venant du processus industriel à travers le collecteur d'analyse (16) vers l'élément capteur (18) pour obtenir de celui-ci un signal indicatif de la teneur en oxygène de l'échantillon de gaz;

caractérisé en ce que :

le capteur d'oxygène est un capteur d'oxygène du type pour automobile (20) comme un capteur λ de gaz d'échappement ;

le moyen de réchauffeur électrique est intégré dans le capteur d'oxygène du type pour automobile (20) et a une valeur de tension nominale de 12 à 14 V ; et

la tension appliquée à l'élément réchauffeur intégré est plus élevée que la valeur de tension nominale, et le courant qui lui est délivré est limité pendant le démarrage à froid pour augmenter la durée de vie du capteur (20).

7. Procédé selon la revendication 6, dans lequel la plage de température souhaitée pour l'élément capteur 18 est située entre 700° C et 820° C.

8. Procédé selon la revendication 6 ou la revendication 7, dans lequel la température du collecteur d'analyseur (16) est maintenue à une température sensiblement constante au-dessus de la température de point de rosée de l'échantillon de gaz.

9. Procédé selon la revendication 6, la revendication 7 ou la revendication 8, dans lequel la tension, appliquée à l'élément réchauffeur intégré du capteur d'oxygène du type pour automobile (20), est de 18 V en courant continu et le niveau de courant est de 1 ampère pendant le fonctionnement normal.

10. Procédé selon l'une quelconque des revendications 6 à 9, dans lequel le courant maximal dans le moyen de réchauffeur électrique intégré est limité de manière à ce qu'il ne dépasse pas environ 2,2 ampères pendant les états de démarrage à froid.

**Patentansprüche**

1. Vorrichtung zum Analysieren des Sauerstoffgehaltes von Gas in einem industriellen Prozeß, wobei die Vorrichtung (10) aufweist:
einen Analysatorverteiler (16), der einen Sauerstoffsensor (20) hat, der funktionell mit jenem verknüpft ist,
Einrichtungen (12, 14), um eine Gasprobe aus dem industriellen Prozeß zu dem Analysatorverteiler (16) zu lenken und über ein Sensorelement (18) des Sauerstoffsensors (20) hinweg,
elektrische Heizeinrichtungen, um das Sensorelement (18) innerhalb eines gewünschten Betriebstemperaturbereiches zu halten, und
eine Stromversorgung (30), die mit der elektrischen Heizeinrichtung verbunden ist,
dadurch gekennzeichnet, daß
der Sauerstoffsensor ein Sauerstoffsensor (20) vom Autotyp ist, wie z.B. ein Abgas-λ-Sensor,
die elektrische Heizeinrichtung einstückig mit dem Sauerstoffsensor (20) vom Autotyp ist und eine nominelle Spannung hat, die bei 12 bis 14 Volt liegt, und
daß die Stromversorgung (30) so betreibbar ist, daß ihre Ausgangsspannung reguliert werden kann,die der integrierten elektrischen Heizeinrichtung mit einem Wert zugeführt wird, der höher ist als der nominelle Spannungsbereich, und so, daß der der integrierten elektrischen Heizeinrichtung während eines Kaltstartes zugeführte Strom begrenzt wird, um die Belastung der integrierten elektrischen Heizeinrichtung zu reduzieren.

2. Vorrichtung nach Anspruch 1, welche aufweist:
Einrichtungen (24), um die Temperatur des Analysatorverteilers (16) zu erfassen, und
Einrichtungen (26), um die Temperatur des Analysatorverteilers (16) auf eine im wesentlichen konstante Temperatur oberhalb der Taupunkttemperatur der Gasprobe zu regeln.

3. Vorrichtung nach Anspruch 2, wobei die im wesentlichen konstante Temperatur, bei welcher der Analysatorverteiler (16) gehalten wird, zwischen 700° C und 820° C liegt.

4. Vorrichtung nach Anspruch 1, 2 oder 3, wobei die von der Stromversorgung (30) der integrierten Heizeinrichtung zugeführte Spannung 18 Volt Gleichspannung ist und daß der Stromwert 1 Ampère beträgt, und zwar während des Normalbetriebes.

5. Vorrichtung nach einem der vorstehenden Ansprüche, wobei der Maximalstrom durch die integrierte elektrische Heizeinrichtung begrenzt ist, so daß er näherungsweise 2,2 Ampère unter Kaltstartbedingungen nicht überschreitet.

6. Verfahren zum Analysieren des Sauerstoffgehaltes eines Gases in einem industriellen Prozeß, wobei das Verfahren die Schritte aufweist:
Anordnen eines Sauerstoffsensors (20), der ein Sensorelement (18) hat, in einem Analysatorverteiler (16),
Halten des Sensorelementes (18) innerhalb eines gewünschten Betriebstemperaturbereiches durch Anlegen einer Spannung an einem Heizelement, und
Lenken einer Gasprobe aus dem industriellen Prozeß durch den Analysatorverteiler (16) zu dem Sensorelement (18), um von dort ein Signal zu erhalten, welches eine Anzeige für den Sauerstoffgehalt der Gasprobe ist,
dadurch gekennzeichnet, daß
der Sauerstoffsensor ein Sauerstoffsensor (20) vom Autotyp, wie z.B. ein Abgas-λ-Sensor ist,
das elektrische Heizelement einstückig mit dem Sauerstoffsensor (20) vom Autotyp ist und einen normalen Spannungsbereich von 12 bis 14 Volt hat, und
daß die an das einstückige Heizelement angelegte Spannung größer ist als der nominale Spannungsbereich und daß der zugeführte Strom während des Kaltstartvorganges begrenzt ist auf die Lebensauer des Sensors (20).

7. Verfahren nach Anspruch 6, wobei der gewünschte Temperaturbereich des Sensorelementes (18) zwischen etwa 700°C und 820°C liegt.

8. Verfahren nach Anspruch 6 oder 7, wobei die Temperatur des Analysatorverteilers (14) auf im wesentlichen kontantem Temperaturniveau oberhalb der Tautemperatur der Gasprobe gehalten werden kann.

9. Verfahren nach Anspruch 6, 7 oder 8, wobei die an das integrierte Heizelement des Sauerstoffsensors (20) vom Autotyp angelegte Spannung 18 Volt DC beträgt und daß der Stromwert während des Normalbetriebes 1 Ampère beträgt.

10. Verfahren nach einem der Ansprüche 6 bis 9, wobei der Maximalstrom durch das integrierte Heizelement so begrenzt ist, daß er näherungsweise 2,2 Ampère während des Kaltstart-Zustandes nicht übersteigt.

FIG. I

FIG. 2